# EUROPEAN PATENT APPLICATION

(11) **EP 0 881 060 A2**
(43) Date of publication of application: **02.12.1998**
(21) Application number: 98304149.2
(22) Date of filing: 26.05.1998
(51) Int. Cl.: B29D 30/52, B60C 19/08

(54) **Method and apparatus for the manufacture of pneumatic tyres having electric discharge means**

(30) Priority: 26.05.1997 JP 151512/97; 26.05.1997 JP 151513/97; 12.01.1998 JP 16388/98; 12.01.1998 JP 16389/98
(71) Applicant: Bridgestone Corporation, Tokyo (JP)
(72) Inventor: Hisatomi, Hideo, Akishima City, Tokyo (JP); Yano, Masashi, Sayama City, Saitama Pref. (JP)
(74) Representative: Whalley, Kevin

(57) **Abstract**

An improved pneumatic tire is produced, which comprises at least one electric discharge element for establishing an electrically conductive path which allows electrostatic charges generated in a vehicle body to be discharged to a road surface. The tire is produced by forming an unvulcanized tread rubber strip, at least the outer region of which is comprised of an electrically non-conductive rubber. At least one opening is formed in at least the outer region of the tread rubber strip and filled with a filler which comprises an electrically conductive unvulcanized rubber. The belt layer and the tread rubber strip are adhered onto a green case, to form a green tire which is then vulcanized so that the tread rubber strip and the fillers form the tread rubber layer and the electric discharge elements, respectively.

## Description

### BACKGROUND OF THE INVENTION

### 1. Field of the Invention

The present invention relates to method and apparatus for producing pneumatic tires having electric discharge means which allows electrostatic charges generated in a vehicle body to be discharged to a road surface.

### 2. Description of the Related Art

In order to simultaneously satisfy requirements for improved gripping and cornering performance on a wet road and wear resistance of pneumatic tires, there has been proposed a pneumatic tire having a tread rubber layer which comprises electrically non-conductive rubber material containing a large amount of silica. In this type of pneumatic tire, the tread rubber layer serves as an electrical insulator and there may be instances wherein a substantial amount of electrostatic charges are stored in a vehicle body without being effectively discharged to a road surface.

For allowing electrostatic charges generated in a vehicle body to be effectively discharged to a road surface, JP-A-9-71, 112 discloses an improved pneumatic tire wherein a tread rubber layer on the radially outer side of a belt layer is composed of an outer rubber layer of an electrically non-conductive rubber and an inner rubber layer of an electrically conductive rubber. Electrically conductive elements are arranged to extend though the outer rubber layer so that electrostatic charges generated in a vehicle body can be discharged though discharge paths which extend from the inner rubber layer to the outer surface of the outer rubber layer. It would be highly desirable that such pneumatic tires can be commercially produced in a simple, economical and reliable manner.

### DISCLOSURE OF THE INVENTION

It is therefore an object to provide method and apparatus which make it possible to produce pneumatic radial tires having electric discharge means, in a simple, economical and reliable manner.

The present invention provides method and apparatus for producing a pneumatic tire comprising a tread rubber layer having an outer surface, a belt layer arranged on radially inner side of the tread rubber layer, and at least one electric discharge element for establishing an electrically conductive path which allows electrostatic charges generated in a vehicle body to be discharged to a road surface.

The method according to one aspect of the present invention comprises the steps of: forming an unvulcanized tread rubber strip having an outer region, at least the outer region of the tread rubber strip being comprised of an electrically non-conductive rubber; forming at least one opening in at least the outer region of the tread rubber strip; filling the opening with a filler which comprises an electrically conductive unvulcanized rubber; adhering a belt layer and the tread rubber strip onto a green case, with the outer surface of the tread rubber strip oriented radially outwards, so as to form a green tire; and vulcanizing the green tire so that the tread rubber strip and the filler form the tread rubber layer and the electric discharge element of the tire, respectively.

The apparatus according to another aspect of the present invention comprises: means for forming an unvulcanized tread rubber strip having an outer region, at least the outer region of the tread rubber strip being comprised of an electrically non-conductive rubber; means for forming at least one opening in at least the outer region of the tread rubber strip; and means for filling said at least one opening with a filler which comprises an electrically conductive unvulcanized rubber. Furthermore, the apparatus is so arranged that a pneumatic tire is produced by adhering a belt layer and the tread rubber strip onto a green case, with the outer surface of the tread rubber strip oriented radially outwards, so as to form a green tire, and vulcanizing the green tire so that the tread rubber strip and the filler form the tread rubber layer and the electric discharge element of the tire, respectively.

### BRIEF DESCRIPTION OF THE DRAWINGS

The present invention will now be explained in further detail below, with reference to certain preferred embodiments shown in the accompanying drawings, wherein:
Fig. 1 is a sectional view, in meridian plane, of one example of pneumatic tire which can be produced according to the present invention;
Fig. 2 is a front view of a molding die plate for extruding a tread rubber strip;
Fig. 3 is a cross-sectional view of the tread rubber strip which has been extruded from the molding die plate of Fig. 2;
Fig. 4 is a front view, partly in section, of one embodiment of the cutting device for forming openings in the tread rubber strip;
Fig. 5 is a sectional view taken along line 5-5 in Fig. 4:
Fig. 6 is a sectional view taken along line 6-6 in Fig. 5;
Fig. 7 is a sectional view, similar to Fig. 5, showing another embodiment of the cutting device;
Figs. 8 and 9 are sectional views showing further examples of pneumatic tire which can be produced according to the present invention;
Fig. 10 is a front view, partly in section, of another embodiment of the cutting device;
Fig. 11 is a sectional view taken along line 11-11 in Fig. 10:
Fig. 12 is a sectional view showing one embodiment of pin element for forming a through-hole in the tread rubber strip;
Fig. 13 is a sectional view showing another embodiment of pin element; and
Fig. 14 is a sectional view showing still another example of pneumatic tire which can be produced according to the present invention.

### DESCRIPTION OF THE PREFERRED EMBODIMENTS

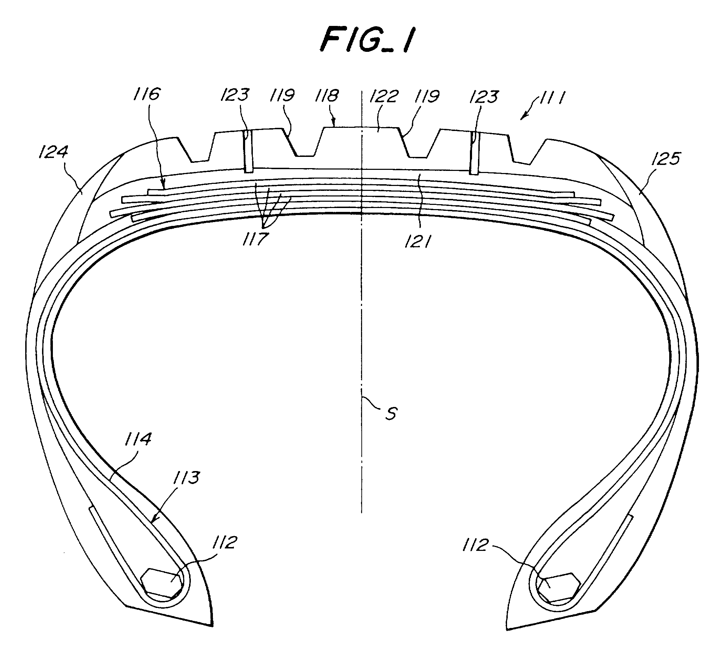

There is shown in Fig. 1 one example of pneumatic radial tire having electric discharge elements for allowing electrostatic charges generated in a vehicle body to be discharged to a road surface. The tire is denoted as a whole by reference numeral 111 and can be advantageously produced by the method and apparatus according to the present invention. The tire 111 includes a pair of bead cores 112 and a toroidal carcass layer 113 extending between the bead cores 112. The carcass layer 113 is composed of at least one carcass ply 114 of which both end portions are turned-up around the respective bead cores 112, from axially inner side toward axially outer side. A number of cords are arranged inside of the carcass ply 114 to extend in the radial or meridional direction. A belt layer 116 is arranged on radially outer side of the carcass layer 113, and composed of a plurality of belt plies 117 embedding cords therein, which are laminated with each other. The cords embedded in the belt plies 117 intersect the equatorial plane S of the tire at predetermined angles, such that the cord of one belt ply 117 also intersect the cords of another belt ply 117. A tread rubber layer 118 comprised of vulcanized rubber is arranged on radially outer side of the belt layer 116. The tread rubber layer 118 has an outer surface which is formed with a plurality of main grooves 119 extending in the circumferential direction, and a plurality of transverse grooves (not shown) which intersect the main grooves 119.

In the example of the tire shown in Fig. 1, the tread rubber layer 118 comprises an inner rubber layer 121 on radially inner side and an outer rubber layer 122 on radially outer side, which are laminated with each other. The inner rubber layer 121 is composed of electrically conductive rubber, whereas the outer rubber layer 122 is composed of electrically non-conductive rubber. As used herein, the term "electrically conductive rubber" refers to a rubber having an electric resistance value of less than 10⁷ Ω•cm, which may be a natural rubber, diene-based rubber or the like, containing a rubber component which is added with carbon-based conductive material such as carbon black, carbon fibers, graphite and the like, or which is added with metal-based conductive material such as metal powder, metal oxide, metal flakes, metal fibers and the like. Furthermore, as used herein, the term "electrically non-conductive rubber" refers to a rubber having an electric resistance value of not less than 10⁷ Ω•cm, which may be a rubber containing a large amount of silica. Table 1 below shows one example of electrically non-conductive rubber which may be used to form the outer rubber layer 122 of the tire 111.

**Table 1**

| | Outer rubber layer | Organic rubber cement | Water-based cement |
|---|---|---|---|
| NR ^{*1} | - | 40 | - |
| SBR ^{*2} | 96 | 60 | - |
| BR ^{*3} | 30 | - | - |
| SiO₂ | 60 | - | - |
| Carbon black | 20 | 60 | - |
| Aromatic oil | 10 | 15 | - |
| ZnO | 3 | 2 | - |
| Anti-oxidant | - | 1.0 | - |
| Vulcanization accelerator | 3.5 | 1.0 | - |
| Sulfur | 1.5 | 1.5 | - |
| Hexane | - | 500 | - |
| Natural rubber latex | - | - | 100 ^{*4} |
| Carbon black dispersion | - | - | 100 ^{*5} |
| Specific resistance (Ω·m) | 10¹⁰ | 10⁶ | 10⁶ |

| | | | |
|---|---|---|---|
| ^{*1} natural rubber | | | |
| ^{*2} stylene-butadiene rubber | | | |
| ^{*3} butadiene rubber | | | |
| ^{*4} rubber content: 60 wt%, pH: approximately 11 | | | |
| ^{*5} aqueous dispersion containing 20 wt% of carbon black | | | |

In the outer rubber layer 122 of the tire 111 shown in Fig. 1, two narrow ring-like conductive elements 123 are arranged in land portions between the main grooves 119 to continuously extend in the circumferential direction. These conductive elements 123 are composed of electrically conductive rubber which has been vulcanized. Preferably, the width of the conductive elements 123 is within a range of 0.01-0.5 mm. The conductive elements 123 with a width which is less than 0.01 mm are difficult to produce. On the other hand, when the width of the conductive elements 123 exceeds 0.5 mm, cracks may be formed in the radially inner ends of the conductive elements 123 to propagate therefrom. The radially inner ends of the conductive elements 123 project slightly into the inner rubber layer 121. The radially outer ends of the conductive elements 123 are exposed at the outer surface of the outer rubber layer 122. Thus, the conductive elements 123 extend between the inner rubber layer 121 and the outer surface of the outer rubber layer 122. Incidentally, reference numerals 124, 125 denote side rubber layers on both sides of the inner and outer rubber layers 121, 122, which are composed of the above-mentioned electrically non-conductive rubber.

The pneumatic radial tire 111 shown in Fig. 1 can be advantageously produced by the method and apparatus according to the present invention, which will be explained below.

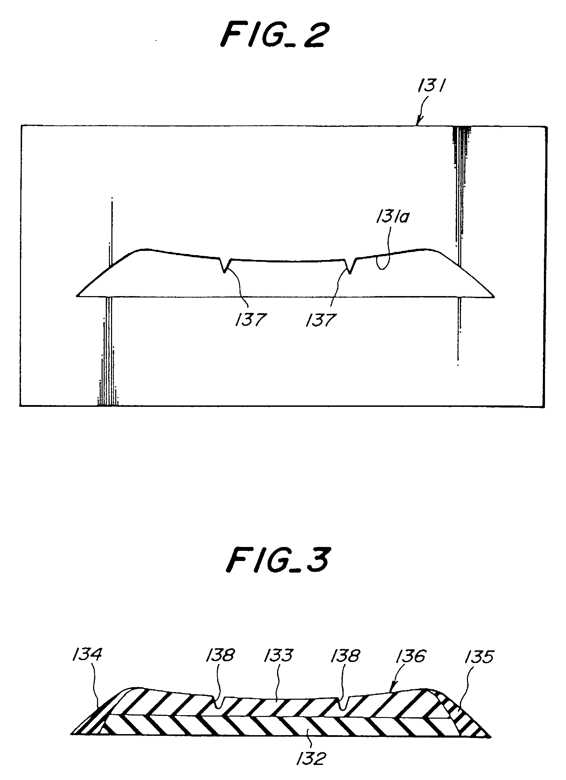

First of all, an unvulcanized rubber is extruded from a molding die plate 131 of an extruder as shown in Fig. 2, so as to form a tread rubber strip 136 having a cross-section as shown in Fig. 3. The tread rubber strip 136 includes an inner rubber body 132 on the radially inner side, and an outer rubber body 133 on the radially outer side, which are laminated with each other. The tread rubber strip 136 further includes side rubbers 134, 135 which are arranged on both sides of the inner and outer rubber bodies 132, 133. The orifice 131a of the molding die plate 131 has an upper edge which is provided with two projections 137. Thus, as the unvulcanized rubber is extruded from the molding die plate 131, two narrow grooves 138 are formed by the projections 137 in the outer surface of the outer rubber body 133 to extend continuously in the longitudinal direction.

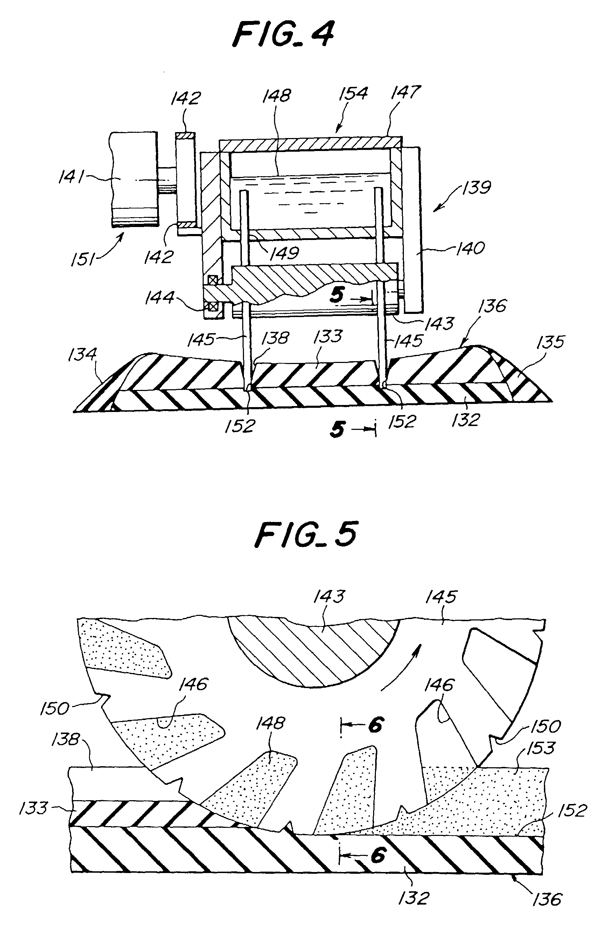

Subsequently, the outer rubber body 133 is subjected to a longitudinal cutting by a cutting device 139 as shown in Figs. 4, 5 and 6. The details of the cutting device 139 will be explained below.

The cutting device 139 includes a movable frame 140 which is arranged immediately above the tread rubber strip 136. The frame 140 is driven by an electric motor 141 through an endless transmission belt 142 which extends in the longitudinal direction of the tread rubber strip 136. Thus, when the motor 141 is actuated and the belt 142 is driven in the normal direction, the frame 140 is caused to move in the longitudinal direction of the tread rubber strip 136. The frame 140 rotatably supports a horizontal shaft 143 having a rotational axis which extends in the width direction of the tread rubber strip 136. To this end, the frame 140 is provided with journal bearings 144 for receiving both ends of the shaft 143.

A plurality of cutter discs 145 (two discs in the illustrated embodiment) are fixedly secured to the outer surface of the shaft 143 at locations axially spaced from each other. Thus, the cutter discs 145 can be rotated integrally with the shaft 143, about the rotational axis thereof. On both sides of each cutter disc 145, a number of shallow recesses 146 are formed in the outer peripheral region. These recesses 146 extend radially to open in the outer periphery of the disc 145, and are spaced from each other in the circumferential direction.

The movable frame 140 is provided with a storage chamber 147 above the shaft 143, for storing electrically conductive rubber 148 in its unvulcanized state. The electrically conductive rubber 148 may be an organic rubber cement obtained by uniformly dispersing, under stirring, a rubber composition kneaded by a Bunbary mixer, rolls or the like, into an organic solvent, such as hexane, petroleum ether, heptane, tetrahydrofuran (THF) or the like. Alternatively, the electrically conductive rubber 148 may be a water-based cement obtained by mixing, under stirring, an aqueous carbon black dispersion with rubber latex. Examples of such organic rubber cement and water-based cement are shown in Table 1.

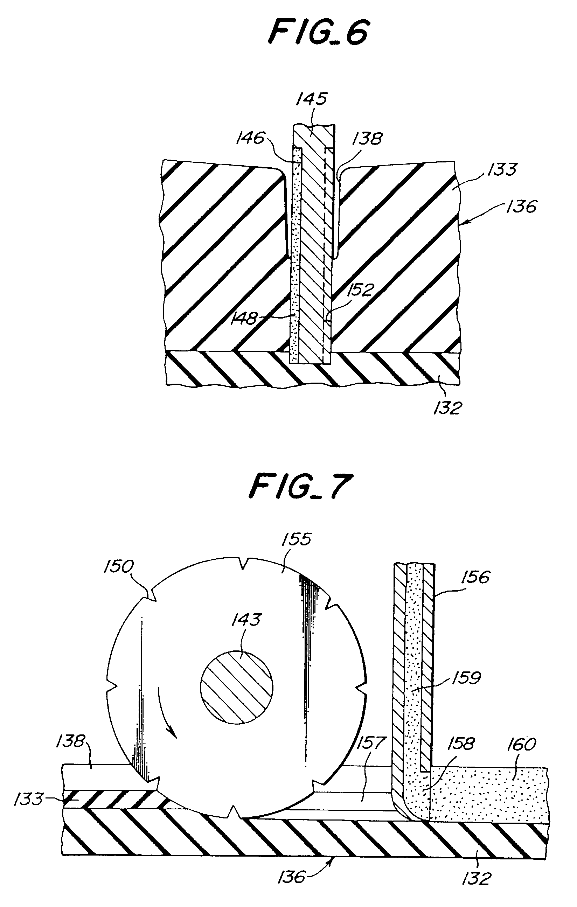

The storage chamber 147 has a bottom wall formed with slits 149, through which the upper portions of the cutter discs 145 are introduced into the chamber 147. As a result, in the upper portions of the cutter discs 145 which are situated within the chamber 147, the recesses 146 are filled with the electrically conductive rubber 148. In the outer periphery of each cutter disc 145, at locations between adjacent recesses 146, there may be provided notches 150 as shown in Fig. 5, which facilitate engagement of the cutter disc 145 into the outer rubber body 133. The above-mentioned electric motor 141 and transmission belt 142 form a moving device 151 for moving the cutter discs 145 in the longitudinal direction of the tread rubber strip 136.

In order to perform cutting operation with respect to the outer rubber body 133 by means of the cutting device 139, the cutter discs 145 are urged against the bottoms of the narrow grooves 138 in the outer rubber body 133, respectively, while the frame 140 supporting the cutter discs 145 is moved by the moving means 151 in the longitudinal direction of the tread rubber strip 136, immediately after it has been extruded. As a result, the outer rubber body 133 is cut by the rotating cutter discs 145 to efficiently and positively form slits 152 which extend radially from the outer surface of the outer rubber body 133 to the inner rubber body 132, or slightly into the inner rubber body 132, and which extend continuously in the longitudinal direction. On this occasion, as a result of cutting from the bottoms of the narrow grooves 138, the cutter discs 145 are guided by the grooves 138 to accurately form the slits 152 at the desired locations while facilitating the cutting operation due to the reduced thickness of the outer rubber body 133 to be cut by the cutter discs 145. As the cutter discs 145 are continuously rotated and the shallow recesses 146 are successively disengaged from the outer rubber body 133 upwards, the electrically conductive rubber 148 which had been filling the recesses 146 is left in the slits 152 as being adhered to the inner surfaces of the slits 152. Thus, the electrically conductive rubber 148 can be filled in the slits 152 simultaneously with the formation of the slits 152. When, in particular, the electrically conductive rubber 148 is an organic rubber cement or water-based cement as explained above, the rubber 148 can be widely spread along the slits 152 to ensure that the rubber 148 can be positively filled in the slits and thereby avoid insufficient or defective filling.

When the circumferential distance between adjacent shallow recesses 146 in the cuter discs 145 is relatively small, the fillers 153 (or the electrically conductive rubber 148) filling the slits 152 are connected to each other after they have been filled into the slits 152. On the contrary, when the circumferential distance between adjacent recesses 146 is relatively large, the fillers 153 filling the slits 152 are not connected to each other, so that they are arranged as being discrete in the longitudinal direction.

The shallow recesses 146 and the storage chamber 147 jointly form means 154 for filling the fillers 153 into the slits 152.

Subsequently, a green case is formed on a building drum, not shown, and a band is formed by placing a belt layer and the tread rubber strip 136 around a band drum, not shown. The band so formed is adhered onto the outer surface of the green case, with the inner rubber body 132 arranged on the radially inner side of the outer rubber body 133, to form a green tire. The green tire is vulcanized in a vulcanizing mold, not shown. By this, the outer and inner rubber bodies 132, 133, the side rubbers 134, 135 and the tread rubber strip 136 are vulcanized to form the inner and outer rubber layers 121, 122, the side rubber layers 124, 125 and the tread rubber layer 118, respectively. Also, the fillers 153 filled into the slits 152 are vulcanized to form the electrically conductive elements 123. When, as mentioned above, the adjacent fillers 153 are arranged isolated in the longitudinal direction, the portions of the slits 152 between the fillers 153 are completely closed during the vulcanization.

With the above-mentioned method and apparatus according to the present invention, it is possible to produce pneumatic tires having electric discharge means with a high manufacturing productivity and in a facilitated manner, because the invention is essentially based on conventional process and requires only minor modification to carry out formation of slits 152 and subsequent filling of fillers 153 into the slits 152. When the tires 111 produced according to the present invention is mounted on automotive vehicles, electrically conductive paths are formed between the vehicle body and the road surface, through the inner rubber layer 121 and the electrical conductive elements 123. Therefore, electrostatic charges generated in the vehicle body can be discharged to the road surface, thereby effectively avoiding occurrence of undesirable spark discharge.

Another embodiment of the cutting device is shown in Fig. 7, which does not form shallow recesses in the cutter disc. Instead, the cutting device according to the illustrated embodiment includes a filling tube 156 which is arranged immediately behind a cutter disc 155 so that it is movable in the longitudinal direction of the tread rubber strip 136 together with the cutter disc. The tube 156 extends generally vertically and has a lower end which can be inserted into the slit 157 formed in the tread rubber strip 136 by the cutter disc 155. The lower end of the tube 156 has an outlet 158 which is in the form of a vertical slit. The tube 156 is supplied with an unvulcanized, electrically conductive rubber 159 from a storage chamber (not shown) which may be provided on the movable frame rotatably supporting the cutter disc 155 as in the previous embodiment. Thus, as the slit 157 is successively formed in the tread rubber strip 136 by the cutter disc 155, the unvulcanized, electrically conductive rubber 159 is discharged from the outlet 158 of the tube 156 into the slit 157 immediately after it is been formed, and remains in the slit 157 as a filler 160 which forms the electrically conductive elements 123 in the outer rubber layer 122.

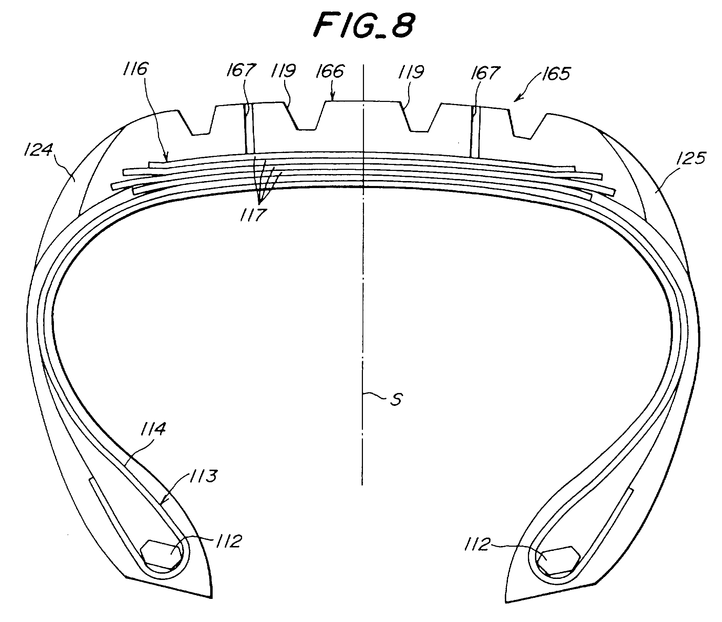

Another example of pneumatic radial tire is shown in Fig. 8, which is denoted as a whole by reference numeral 165 and which may be produced by the method and apparatus according to the present invention. The pneumatic tire 165 includes a tread rubber layer 166 on the radially outer side of the belt layer 116, which is composed in its entirety of electrically non-conductive rubber, as well as electrically conductive elements 167 arranged in the tread rubber layer 166 to establish electrical conductive paths for allowing electrostatic charges generated in the vehicle body to be discharged to the road surface. Structural features of the tire 165 other than the above are the same as those in the tire 111 shown in Fig. 1.

The pneumatic tire 165 shown in Fig. 8 can be produced by extruding an unvulcanized tread rubber strip from the molding die plate of an extruder essentially in the manner as described above. On such occasion, a plurality of narrow grooves are formed in the outer surface of the extruded tread rubber strip by projections in the molding die plate, so as to extend in the longitudinal direction of the tread rubber strip. Cutter discs 145 of the cutting device 139 are urged against the bottoms of the narrow grooves to form slits which extend radially from the outer surface to the inner surface of the tread rubber strip, and which extend continuously in the longitudinal direction. Simultaneously with the formation of the slits by the cutter discs 145, the filling device 154 comprising the shallow recesses 146 in the cutter discs 145 and the storage chamber 147 serves to fill the slits with fillers comprising unvulcanized, and electrically conductive cement-like rubber. A green case is formed by adhering onto the outer surface of a green a band which comprises a belt layer and the tread rubber strip. The green tire is then vulcanized so that the tread rubber strip and the fillers form the tread rubber layer 166 and the electrically conductive elements 167 of the tire 165, respectively.

In the above-mentioned embodiments of the present invention, the slits 152 in the tread rubber strip 136 are formed by moving the cutter discs 145 in the longitudinal direction of the tread rubber strip 136. However, the cutter discs may have a stationary arrangement provided that the tread rubber strip is moved in its longitudinal direction relative to the cuter discs, or both the cutter discs and the tread rubber strip may be moved in the longitudinal direction. Also, the cutter discs may be replaced with knife-like cutters or cutter blades, or with a laser cutting tool of which the intensity is variable for adjusting the depth of the slits.

Furthermore, the number of the electrically conductive elements 123 may be changed, if necessary. Thus, there may be arranged a single electrically conductive element only at the widthwise center portion of the tread. Such electrically conductive element can be formed by providing a single projection in the molding die plate, forming by the projection a single narrow groove in the outer surface of the tread rubber layer, and forming a slit in the bottom of the narrow groove. Alternatively, three or more electrically conductive elements may be arranged in the tread rubber layer to extend continuously in the longitudinal direction.

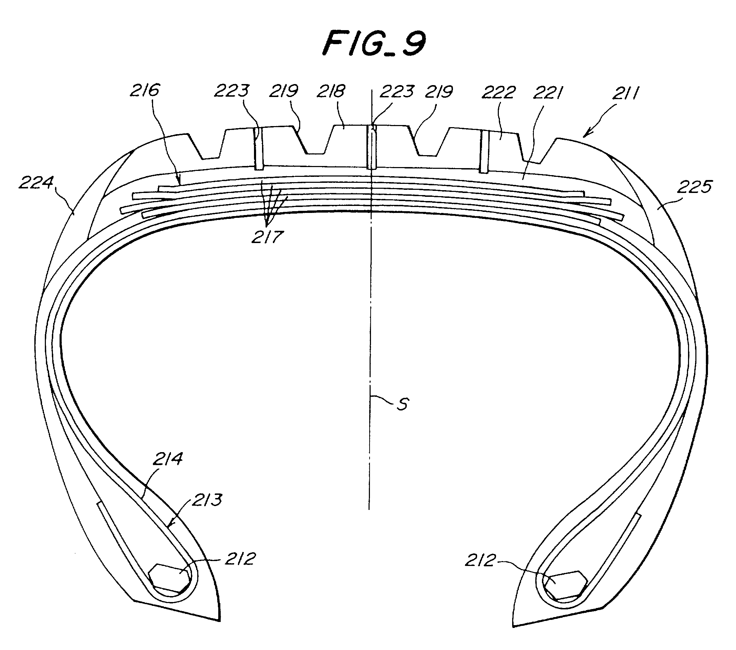

Still another example of pneumatic radial tire is shown in Fig. 9, which is denoted as a whole by reference numeral 211 and which may be produced by the method and apparatus according to the present invention. The pneumatic tire 211 is similar to the tire 111 shown in Fig. 1, so that corresponding elements are denoted by the same reference numerals for the last two digits but added with 100. Thus, the pneumatic tire 211 includes bead cores 212, a carcass layer 213 comprising a radial carcass ply 214, a belt layer 216 comprising a belt ply 217, a tread rubber layer 218 having an outer surface which is formed with a plurality of main grooves 219 extending in the circumferential direction, and a plurality of transverse grooves (not shown) which intersect the main grooves 219.

As in the example shown in Fig. 1, the tread rubber layer 218 comprises an inner rubber layer 221 on radially inner side and an outer rubber layer 222 on radially outer side, which are laminated with each other. The inner rubber layer 221 is composed of electrically conductive rubber, whereas the outer rubber layer 222 is composed of electrically non-conductive rubber. The tire 211 shown in Fig. 9 differs from that of Fig. 1 essentially in the design and arrangement of the electrically conductive elements 223 provided in the outer rubber layer 222. More specifically, each of the electrically conductive elements 223 is of a small-diameter cylindrical shape and extends in the radial direction of the tire. A number of such elements 223 are arranged in the tread rubber layer 218 to form three circumferential rows.

The pneumatic radial tire 211 shown in Fig. 9 can be advantageously produced by slightly modified method and apparatus according to the present invention, which will be explained below.

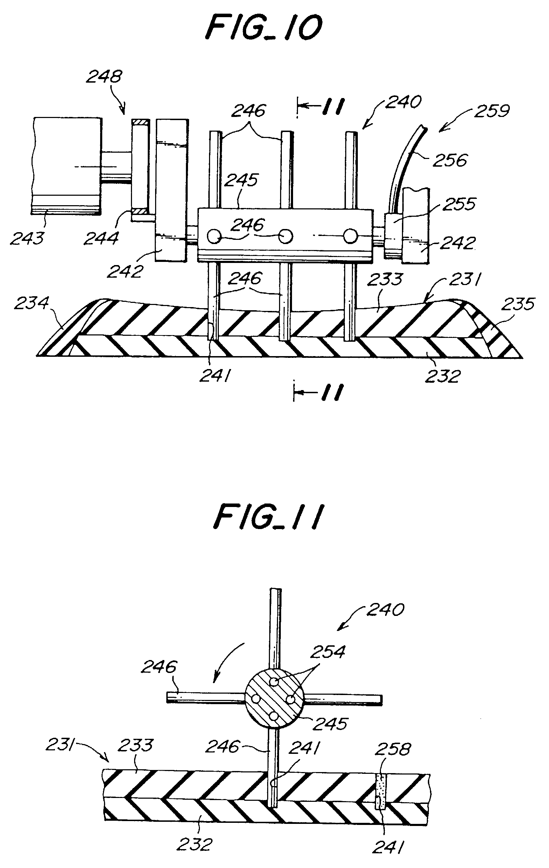

First of all, an unvulcanized rubber is extruded from a molding die plate of an extruder so as to form a tread rubber strip 231 having a cross-section as shown in Fig. 10. The molding die plate may be essentially same as that shown in Fig. 2. Thus, the tread rubber strip 231 as extruded includes an inner rubber body 232 on the radially inner side, and an outer rubber body 233 on the radially outer side, which are laminated with each other. The tread rubber strip 231 further includes side rubbers 234, 235 which are arranged on both sides of the inner and outer rubber bodies 232, 233.

Subsequently, with a rotatable tool 240 as shown in Figs. 10, 11 and 12, a number of holes 241 are successively formed in the tread rubber strip 231. Each hole 241 extends vertically to the tread rubber trip 231. Furthermore, the holes 241 are arranged to form three rows extending in the longitudinal direction of the tread rubber strip 231. The details of the rotatable tool 240 will be explained below.

The rotatable tool 240 includes a movable frame 242 which is arranged immediately above the tread rubber strip 231. The frame 242 is driven by an electric motor 243 through an endless transmission belt 244 which extends in the longitudinal direction of the tread rubber strip 231. Thus, when the motor 243 is actuated and the belt 244 is driven in the normal direction, the frame 242 is caused to move in the longitudinal direction of the tread rubber strip 231. The frame 140 rotatably supports a horizontal cylinder 245 having a rotational axis which extends in the width direction of the tread rubber strip 231. To this end, the frame 242 is provided with journal bearings for receiving small diameter end portions on both sides of the cylinder 245.

A plurality of radial pin elements 246 are provided on the outer peripheral surface of the cylinder 245. The pin elements 246 are arranged to form three circumferential rows, corresponding to the arrangement of the holes 241 in the tread rubber strip 231. Further, the pin elements 246 in each row are spaced from each other by a predetermined angle. Depending upon the desired arrangement of the electrically conductive elements 223 in the pneumatic tire, there may be provided only the central row of the pin elements 246, or only the side rows of the pin elements 246.

When the pin elements 246 on the cylinder 245 are urged against the outer rubber body 233 of the tread rubber strip 231 and moved in the longitudinal direction, the cylinder 245 is caused to rotate about its rotational axis while the pin elements 246 are successively forced into the outer rubber body 233. As a result, holes 241 are successively formed in the outer rubber body 233 such that they extend from the outer surface of the outer rubber body to slightly inside of the inner rubber body 232. The above-mentioned electric motor 243 and transmission belt 244 form a moving device 248 for moving cylinder 245 in the longitudinal direction of the tread rubber strip 231 and forcing the pin elements 246 into the outer rubber body 233 of the tread rubber strip 231 to successively form holes 241 which extend from the outer surface of the outer rubber body 233 to the inner rubber body 232.

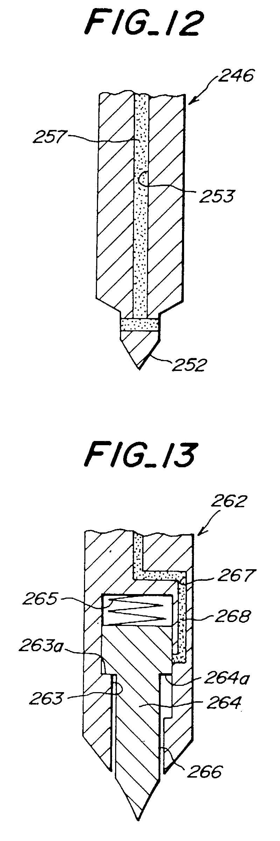

As particularly shown in Fig. 12, each pin element 246 has a tapered free end portion 252 and an inner radial passage 253 with a radially outer end which opens in the free end portion 252 of the pin element 246. There are arranged a plurality of axial passages 245 within the cylinder 254, as shown in Fig. 11, and the radial passages 253 in the pin elements 246, which are arranged at the same circumferential position of the cylinder 245, are connected to the relevant axial passage 254. A rotary valve 255 is supported by the frame 242 at a location adjacent to one end of the cylinder 245. The rotary valve 255 is connected, on its upstream side, to a reservoir for an unvulcanized, electrically conductive rubber in a liquid- or cement-like form, through a supply hose 256. The rotary valve 255 on its downstream side is intermittently connected to the axial passage 254 during the of rotation of the cylinder 245. The electrically conductive rubber to be supplied through the valve 255 may be an organic rubber cement or water-based cement which has been shown in, and explained with reference to Table 1. As the cylinder 245 is rotated, the pin elements 246 at the same circumferential position on the cylinder 245 are oriented vertically downwards and forced into the tread rubber strip 231 and subsequently disengaged therefrom. During the period in which the pin elements 246 are in engagement with the tread rubber strip 231, the rotary valve 255 brings the relevant axial passage 254 into communication with the supply hose 256 so that the electrically conductive rubber 257 is admitted into the radial passages 253 in the relevant pin elements 246, and discharged from the outer ends of the radial passages 253 and charged into the holes 241 to form the fillers 258 while the pin elements 246 are in engagement with the tread rubber strip 231. The fillers 258 comprising electrically conductive rubber 257 can be filled into the holes 241 simultaneously with the formation of the holes 241. When, in particular, the electrically conductive rubber 247 is an organic rubber cement or water-based cement as explained above, the rubber 247 can be positively charged into the holes 241 to thereby avoid insufficient or defective filling.

The passages 253, 254, the rotary valve 255 and the supply hose 256 jointly form means 59 for filling the fillers 258 into the holes 241.

Subsequently, a green case is formed on a building drum, not shown, and a band is formed by placing a belt layer and the tread rubber strip 231 around a band drum, not shown. The band so formed is adhered onto the outer surface of the green case, with the inner rubber body 232 arranged on the radially inner side of the outer rubber body 233, to form a green tire. The green tire is vulcanized in a vulcanizing mold, not shown. By this, the outer and inner rubber bodies 232, 233, the side rubbers 234, 235 and the tread rubber strip 231 are vulcanized to form the inner and outer rubber layers 221, 222, the side rubber layers 224, 225 and the tread rubber layer 218, respectively. Also, the fillers 258 filled into the holes 241 are vulcanized to form the electrically conductive elements 223.

With the above-mentioned method and apparatus according to the present invention, it is possible to produce pneumatic tires having electric discharge means with a high manufacturing productivity and in a facilitated manner, because the invention is essentially based on conventional process and requires only minor modification to carry out formation of holes 241 and simultaneous filling of fillers 258 into the slits 241. When the tires 211 produced according to the present invention is mounted on automotive vehicles, electrically conductive paths are formed between the vehicle body and the road surface, through the inner rubber layer 221 and the electrical conductive elements 223. Therefore, electrostatic charges generated in the vehicle body can be discharged to the road surface, thereby effectively avoiding occurrence of undesirable spark discharge.

Another embodiment of the pin element in the rotatable tool 240 is shown in Fig. 7, which is denoted by reference numeral 262. In this embodiment, the pin element 262 has a radially outer end which is formed with a radial bore 263. The bore 263 serves to slidably guide a needle 264 such that the outer end of the needle 264 projects from the bore 263. A compression spring 265 is arranged between the bottom of the bore 263 and the inner end of the needle 264, to normally bias the needle in a direction in which the outer end of the needle 264 projects outwards from the bore 263. The outward movement of the needle 264 is limited by the abutment of a shoulder 264a on the needle 264 against a corresponding shoulder 263a on the inner surface of the bore 263. When the pin element 262 is forced into the outer rubber body of the tread rubber strip, essentially in the manner as explained above with reference to the pin element 264 in the previous embodiment, the needle 264 is retracted into the bore 263 against the force of the spring 265. The region of the needle 264 between the outer end and the shoulder 264a has a reduced outer diameter relative to the inner diameter of the bore 263, so that an annular passage 266 is formed along that region. Another passage 267 is formed in the pin element 262 and has one end connected to the reservoir for an unvulcanized, electrically conductive rubber 268, and another end which opens into the bore 263.

When the needle 264 is out of engagement with the outer rubber body of the tread rubber strip, and the outward movement of the needle 264 is thus limited by the engagement between the shoulders 263a, 264a, the communication between the passages 266, 267 is blocked by the needle 264. On the other hand, when the needle 264 is forced into the outer rubber body of the tread rubber strip, the needle 264 is retracted into the bore 263 so that the passages 266, 267 are communicated with each other and the electrically conductive rubber 268 is discharged from the passage 266 and filled into the hole in the outer rubber member of the tread rubber strip.

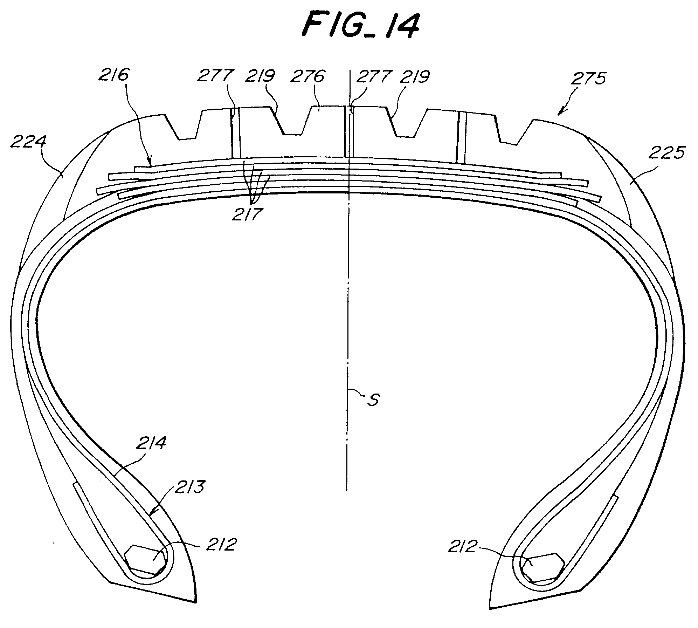

In this way, according to the embodiment shown in Fig. 13, the needle 264 serves to establish or block communication between the passages 266, 267 and to thereby automatically control the supply of the electrically conductive rubber to be filled into the holes in the outer rubber body of the tread rubber strip, so that the rotary valve as in the previous embodiment can be eliminated.

Still another example of pneumatic radial tire is shown in Fig. 14, which is denoted as a whole by reference numeral 275 and which may be produced by the method and apparatus explained above with reference to Figs. 10-13. The pneumatic tire 275 is similar to those shown in Figs. 8 and 9, and includes a tread rubber layer 276 on the radially outer side of the belt layer 216, which is composed in its entirety of electrically non-conductive rubber, as well as electrically conductive elements 277 arranged in the tread rubber layer 276 to establish electrical conductive paths for allowing electrostatic charges generated in the vehicle body to be discharged to the road surface. Structural features of the tire 275 other than the above are the same as those in the tire 211 shown in Fig. 9.

The pneumatic tire 275 shown in Fig. 14 can be produced by extruding an unvulcanized tread rubber strip from the molding die plate of an extruder essentially in the manner as described above. The pin elements 246 on the cylinder 245 are urged against the outer rubber body 233 of the tread rubber strip 231 and moved in the longitudinal direction, so that holes 241 extending from the outer surface to the inner surface of the tread rubber strip are successively formed and simultaneously filled with electrically conductive rubber as fillers. Subsequently, a green case is formed by adhering onto the outer surface of a green a band which comprises a belt layer and the tread rubber strip. The green tire is then vulcanized so that the tread rubber strip and the fillers form the tread rubber layer 276 and the electrically conductive elements 277 of the tire 275, respectively.

In the above-mentioned embodiments of the present invention, the holes 241 in the tread rubber strip 231 are formed by moving the rotatable tool 245 in the longitudinal direction of the tread rubber strip 231. However, the rotatable tool may be stationary in the longitudinal direction provided that the tread rubber strip is moved in its longitudinal direction relative to the tool 245, or both the rotatable tool 245 and the tread rubber strip 231 may be moved in the longitudinal direction. Also, while the electrically conductive rubber has been explained as being filled into the holes 241 from the outer ends of the pin elements 246, 262 of the tool, during or immediately after formation of the holes, it is alternatively possible to coat the outer surface of the tread rubber strip with the electrically conductive rubber after the holes have been formed, so that they are filled into the holes.

While the present invention has been described above with reference to specific embodiments, they were presented by way of examples only, and do not limit the scope of the invention as defined by the appended claims. It is of course that various modifications may be made without departing from the scope of the invention.

## Claims

1. A method of producing a pneumatic tire comprising a tread rubber layer having an outer surface, a belt layer arranged on radially inner side of the tread rubber layer, and at least one electric discharge element for establishing an electrically conductive path which allows electrostatic charges generated in a vehicle body to be discharged to a road surface, wherein said method comprises the steps of:
- forming an unvulcanized tread rubber strip having an outer region, at least said outer region of the tread rubber strip being comprised of an electrically non-conductive rubber;
- forming at least one opening in at least said outer region of the tread rubber strip;
- filling said opening with at least one filler comprising an electrically conductive unvulcanized rubber;
- adhering a belt layer and said tread rubber strip onto a green case, with said outer surface of the tread rubber strip oriented radially outwards, so as to form a green tire; and
- vulcanizing said green tire so that said tread rubber strip and said filler form said tread rubber layer and said electric discharge element, respectively.

2. The method according to claim 1, wherein said tread rubber strip is formed by laminating an outer rubber layer of an electrically non-conductive rubber with an inner rubber layer of an electrically conductive rubber, and wherein said at least one opening is formed in said outer rubber layer to extend from an outer surface to an inner surface thereof and filled with said filler so as to be electrically connected to said inner rubber layer.

3. The method according to claim 1, wherein said opening is formed in said tread rubber strip to extend from said outer surface to an inner surface thereof, and wherein said opening is filled with said filler so that said filler can be electrically connected to said belt layer.

4. The method according to claim 2, wherein said tread rubber strip is extruded from an orifice of a molding die having at least one projection, and said opening in the tread rubber strip is formed by said projection as a slit in the outer surface of the outer rubber layer, said slit extending in a longitudinal direction of the tread rubber strip and having a bottom which is cut in the longitudinal direction so that said slit opens in the inner surface of the outer rubber layer.

5. The method according to claim 3, wherein said tread rubber strip is extruded from an orifice of a molding die having at least one projection, and said opening is formed by said projection as a slit in the outer surface of the extruded tread rubber strip, said slit extending in a longitudinal direction of the tread rubber strip and having a bottom which is cut in the longitudinal direction so that said slit opens in the inner surface of the tread rubber strip.

6. The method according to claim 4 or 5, wherein said bottom of the slit is cut by a cutter disc having a rotational axis which extends in the width direction of the tread rubber strip.

7. The method according to claim 2, wherein said at least one opening in the outer rubber layer is formed as a series of longitudinally aligned holes which extend through the outer rubber layer to the inner surface thereof.

8. The method according to claim 3, wherein said at least one opening in the tread rubber strip is formed as a series of longitudinally aligned holes which extend through the tread rubber layer to the inner surface thereof.

9. The method according to claim 7 or 8, wherein said holes are formed by a rotatable tool having a plurality of pin elements having a rotational axis which extends in the width direction of the tread rubber strip, and comprising a plurality of radial pin elements which are spaced from each other in a circumferential direction of the tool.

10. The method according to claim 1, wherein said fillers are filled into said openings in a liquid-like state.

11. An apparatus for producing a pneumatic tire comprising a tread rubber layer having an outer surface, a belt layer arranged on radially inner side of the tread rubber layer, and at least one electric discharge element for establishing an electrically conductive path which allows electrostatic charges generated in a vehicle body to be discharged to a road surface, wherein said apparatus comprises:
- means for forming an unvulcanized tread rubber strip having an outer region, at least said outer region of the tread rubber strip being comprised of an electrically non-conductive rubber;
- means for forming at least one opening in at least said outer region of the tread rubber strip; and
- means for filling said at least one opening with a filler which comprises an electrically conductive unvulcanized rubber;
and wherein said apparatus is so arranged that said pneumatic tire is produced by adhering a belt layer and said tread rubber strip onto a green case, with said outer surface of the tread rubber strip oriented radially outwards, so as to form a green tire, and vulcanizing said green tire so that said tread rubber strip and said filler form said tread rubber layer and said electric discharge element, respectively.

12. The apparatus according to claim 11, wherein said means for forming an unvulcanized tread rubber strip comprises an extruder.

13. The apparatus according to claim 12, wherein said extruder is adapted to extrude an outer rubber layer comprising an electrically non-conductive rubber and an inner rubber layer comprising an electrically conductive rubber, which are laminated with each other.

14. The apparatus according to claim 12, wherein said means for forming at least one opening in said tread rubber strip comprises at least one projection which is disposed in a molding die plate of the extruder so as to project into the tread rubber strip as it is being extruded.

15. The apparatus according to claim 12, wherein said means for forming at least one opening in said tread rubber strip comprises at least one cutter disc which is arranged on the downstream side of said extruder, said cutter disc having a rotational axis which extends in the width direction of the tread rubber strip so as to form a longitudinally continuous slit as said at least one opening.

16. The apparatus according to claim 12, wherein said means for forming at least one opening in said tread rubber strip comprises a rotatable tool which is arranged on the downstream side of said extruder, said tool having a plurality of pin elements having a rotational axis which extends in the width direction of the tread rubber strip, and said tool comprising a plurality of radial pin elements which are spaced from each other in a circumferential direction of the tool to form a series of longitudinally aligned holes as said at least one opening.
